# EUROPÄISCHE PATENTSCHRIFT

(11) **EP 1 134 156 B1**
(45) Veröffentlichungstag und Bekanntmachung des Hinweises auf die Patenterteilung: **01.03.2006**
(21) Anmeldenummer: 01105975.5
(22) Anmeldetag: 10.03.2001
(51) Int. Cl.: B62M 25/04, B62K 23/06

(54) **Einwegkraftübertragung**
One way transmission
Transmission unidirectionnelle

(30) Priorität: 17.03.2000 DE 10013262
(43) Veröffentlichungstag der Anmeldung: 19.09.2001
(73) Patentinhaber: SRAM Deutschland GmbH, 97404 Schweinfurt (DE)
(72) Erfinder: Assel, Martin, 91315 Höchstadt a. d. Aisch (DE)

(56) Entgegenhaltungen:
- EP-A- 0 509 457
- DE-B- 1 195 568
- US-A- 3 972 247
- US-A- 4 864 885
- US-A- 5 479 776

## Beschreibung

Die vorliegende Erfindung betrifft eine Einwegkraftübertragung mit Positionssperre nach dem Oberbegriff der Ansprüche 1, 8 und 15. Diese Einwegkraftübertragung findet ihre Anwendung in Ratschmechanismen z.B. in Hebelschaltem, Drehgriffschaltern, Triggerschaltem zur Betätigung von Gangschaltungen an Fahrrädern oder in Ratschen für Werkzeuge, Wagenheber und sonstigen Anwendungsfällen wo eine Einwegkraftübertragung sowie eine Rückstellung des Betätigungselementes in die Ausgangsposition gewünscht wird.

Ratschmechanismen wie sie z.B. in Schaltern zur Betätigung von Fahrradschaltungen zum Einsatz kommen sind aus den Patentschriften EP 0371429 A2, EP 0647557 B1, FR 2701917 und GB 2012893 A bekannt.

Diese Schalter beinhalten einen Schalthebel zum Aufziehen bzw. Aufwickeln des Schaltzuges und einen Freigabehebel oder eine Freigabetaste zum Lösen einer Positioniereinrichtung. Der Schalthebel verdreht über ein, in Eingriffsrichtung vorgespanntes Einwegübertragungselement, die Aufwickelspule, entgegen einer auf den Schaltzug wirkenden Rückstellfeder. Die Positioniereinrichtung hält in der nicht geöffneten Stellung die Aufwickelspule fest und wirkt somit der Rückstellfeder, die auf den Schaltzug wirkt, entgegen. Über eine, von einer Feder vorgespannten Freigabetaste kann die Positionierwirkung schrittweise aufgehoben werden. Der Schalthebel wird nach der Betätigung ebenfalls von einer Rückstellfeder in seine Ausgangsstellung zurück gebracht, dabei ratscht das angefederte Einwegübertragungselement über die Sägezahnkontur der Aufwickelspule.

Zur Realisierung dieser Aufzieh- und Freigabefunktion werden viele Bauteilen wie z.B. Schalthebel mit Rückstellfeder, Einwegübertragungselement mit Vorspannfeder, Aufwickelspule mit Sägezahnkontur, Positioniereinrichtung mit Positionierklinken und Vorspannfeder sowie eine Freigabetaste mit Rückstellfeder benötigt.

Diese Vielzahl von genau aufeinander abgestimmten Bauteilen führen zu einen erheblichen Herstellungs- und Montageaufwand und verlangen einen entsprechenden Bauraum im Schaltergehäuse. Zudem sind diese Bauteile aufgrund einer hohen Lebensdauerforderung stabil auszuführen, was sich auch auf Gewicht und Kosten der Schaltereinheit auswirkt.

Im Dokument EP 0 509 457 ist ein Schalter gezeigt, in dem die Bedienhebel durch eine Rückstellfeder in die Ausgangsposition vor der Bedienoperation zurück gebracht werden. Für die Bewegung einer Aufwickelspule für einen Betätigungsseilzug sind sowohl für die Bewegung zum Aufwickeln des Seilzuges als auch für die Bewegung zum Halten des Seilzuges beim Freigabevorgang Einwegübertragungselemente vorhanden, die mittels Vorspannfedern in Richtung zum Eingriff mit einer Rastverzahnung vorgespannt sind. Die von der Rückstellfeder separat vorzusehenden Vorspannfedern bedingen einen konstruktiven Aufwand und verursachen Kosten.

Aufgabe der Erfindung ist es ohne Beeinträchtigung der Gesamtfunktion die Anzahl der benötigten Bauteile zu verringern, den Fertigungsaufwand und Montageaufwand zu minimieren sowie Gewicht und Bauraum zu reduzieren.

Die Lösung dieser Aufgabe wird gemäß den kennzeichnenden Merkmalen der Patentansprüche, im wesentlichen durch Zusammenlegung mehrerer Funktionen in ein Bauteil erreicht:
a) Schalthebelrückstellung und Vorspannung des Einwegübertragungselementes mit nur einer Feder, Wegfall der Vorspannfeder,
b) Schalthebel und Einwegübertragungselement sind ein Bauteil, Wegfall des separaten Einwegübertragungselementes und der Vorspannfeder,
c) Schalthebel, Einwegübertragungselement und Rückstellfeder sind ein Bauteil, Wegfall der separaten Einwegübertragung, der separaten Rückstellfeder und der Vorspannfeder,
d) Positioniereinrichtung und Positionierklinken sind ein Bauteil, Wegfall der separaten Positionierklinken und der Vorspannfeder,
e) Positioniereinrichtung mit Positionierklinken , Betätigungstaste mit Rückstellelement oder Kombinationen dieser Komponenten bilden ein Bauteil, Wegfall der Vorspannfeder, der separaten Betätigungstaste sowie des separaten Rückstellelementes,
f) Zusammenfassung der Aufwickelkomponente zu einem Aufwickelmodul sowie der Positionierkomponente zu einem Positioniermodul, Vereinfachung der Montage.

Bei einem bevorzugten Ausführungsbeispiel der Erfindung zu a) wird die Rückstellfeder, die das als Schalthebel ausgebildete Schaltelement nach erfolgter Betätigung in seine Ausgangslage zurückbringt, nicht wie üblich zwischen Gehäuse bzw. Trägerteil und Schalthebel gespannt, sondern am Gehäuse und am Einwegübertragungselement angelenkt. Durch diese erfinderische Anordnung der Rückstellfeder wird zum einen das Einwegübertragungselement in Form einer schwenkbaren Sperrklinke immer in Richtung Zahnkontur, die am Drehelement bzw. an der Aufwikkelspule angebracht ist, vorgespannt und zum anderen die Rückstellung des Schalthebels bewirkt. Die Sperrklinke schwenkt um eine Achse die fest mit dem Schalthebel verbunden ist und wird von der Rückstellfeder, die zwischen dem Drehpunkt und der Klinke angelenkt ist, gegen die Sägezahnkontur am Drehelement vorgespannt. Durch diese Federanlenkung wird die sonst benötigte, zusätzliche Vorspannfeder überflüssig und kann eingespart werden. Die an der Sperrklinke wirkende Vorspannkraft wird zum einen von der Größe und Richtung der Federkraft des Federelementes und zum anderen von der Lage des Anlenkpunktes bzw. vom wirksamen Hebelarm beeinflußt. Dieser Anlenkpunkt für die Rückstellfeder wird an der Sperrklinke natürlich so gewählt, daß diese in Richtung Zahnkontur vorgespannt wird, und liegt auf einem vom Schalthebeldrehpunkt ausgehenden Radius zwischen der Zahnkontur der Aufwickelspule und dem Drehpunkt der Klinke. Die Anordnung des Anlenkpunktes auf dem Radius zwischen Sperrklinkendrehpunkt und der Zahnkontur ermöglicht die Variation der wirksamen Vorspannkraft von Null, wenn die Federkraft durch den Klinkendrehpunkt geht, bis Maximum wenn die Federkraft an einem möglichst kleinen Radius z.B. etwa dem der Zahnkontur angreift.

Wie bei Ratschenmechanismen insbesondere in Schaltern für Fahrradgangschaltungen üblich, unterscheidet man zwischen Betätigung des Schaltzuges in Aufwickelrichtung, Halten der Aufwickelspule in einer ausgewählten Schaltstellung und Freigabe des unter Federvorspannung befindlichen Schaltzuges in Abwickelrichtung.

Zum Aufwickeln des Schaltzuges werden im wesentlichen ein Betätigungselement in Form eines Schalthebels, ein oder mehrere Einwegübertragungselemente in Form von Sperrklinken und eine mit einer oder mehreren Zahnkonturen versehene Aufwikkelspule benötigt, die in einem Gehäuse oder einem Trägerteil angeordnet sind. Zudem sorgt üblicherweise eine Rückstellfeder für die Rückstellung des Schalthebels in die Ausgangsstellung und eine oder mehrere Vorspannfedern für einen sicheren Eingriff der Einwegübertragungselemente in die Sägezahnkontur an der Aufwickelspule.

### Kurzbeschreibung der Zeichnung

Anhand mehrerer Zeichnungen werden Ausführungsbeispiele zur weiteren Erläuterung der Erfindungsmerkmale gezeigt:
- Fig. 1: zeigt den Stand der Technik für eine Einwegübertragung Insbesondere die Anordnung und Anlenkung der Schalthebelrückstellfeder und der Sperrklinkenvorspannfeder an einem Schalthebel
- Fig. 2: zeigt einen Schalthebel mit einer Einwegübertragung Insbesondere die erfinderische Anordnung der Schalthebelrücksteilfeder an der Sperrklinke

### Beschreibung der bevorzugten Ausführungsbeispiele

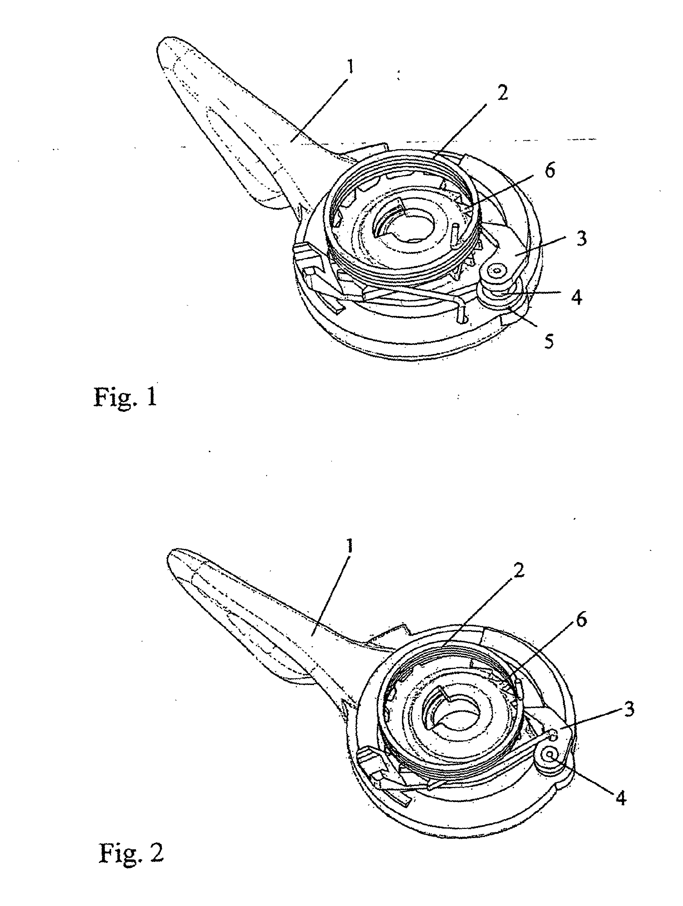

in Fig. 1 wird die Federanordnung an einem Schalthebel 1 für eine Fahrradschaltung gemäß dem Stand der Technik gezeigt. Eine Rückstellfeder 2 ist mit einem Ende am Schalthebel 1 angelenkt und das andere Ende stützt sich im eingebauten Zustand am hier nicht gezeigten Gehäuse ab. Diese Rückstellfeder 2 bringt den Schalthebel 1 nach dem Schaltvorgang wieder in die Ausgangsstellung zurück. Das Einwegübertragungselement 3 in Form einer Sperrklinke schwenkt um eine Achse 4 , die fest mit dem Schalthebel 1 verbunden ist. Eine Vorspannfeder 5 ist um die Achse 4 angeordnet und stützt sich mit dem einen Ende am Schalthebel 1 ab und spannt mit dem anderen Ende die Sperrklinke 3 gegen die Zahnkontur 6 am hier nicht gezeigten Drehteil bzw. Aufwickelspule vor.

Gemäß Fig.2 entfällt die Vorspannfeder 5 zum Andrücken des Einwegübertragungselementes 3 . Diese Vorspannfunktion übernimmt die Rückstellfeder 2 , die sich mit einem Ende am hier nicht gezeigten Gehäuse abstützt und mit dem anderen Ende sowohl das Einwegübertragungselement 3 gegen die Zahnkontur 6 vorspannt, als auch den Schalthebel 1 nach dem Schaltvorgang zurückstellt. Der Anlenkpunkt der Rückstellfeder 2 liegt zwischen dem Drehpunkt der Sperrklinke 3 und dem mit einer Zahngeometrie versehenen Sperrklinkenende. Mit der Lage des Federanlenkpunktes kann die erforderliche Vorspannkraft beeinflußt werden.

### Bezugszeichenliste

- 1: Schalthebel
- 2: Rückstellfeder
- 3: Einwegübertragungselement/Sperrklinke
- 4: Achse
- 5: Vorspannfeder
- 6: Zahnkontur
- 7: Mitnehmerzungen
- 8: Gehäuseabschnitt
- 9: Biegefeder
- 10: Betätigungsfläche
- 11: Positionierelement
- 12: Schwenkachse
- 13: Erste Positionierklinke
- 14: Zweite Positionierklinke
- 15: Betätigungstaste
- 16: Rückstellelement

## Patentansprüche

1. Schalthebelanordnung mit Einwegkraftübertragung mit Rückstellfunktion, die aufweist:
- ein Gehäuse,
- ein Betätigungselement (1), ausgebildet als Schalthebel, das um eine Drehachse schwenkbar bzw. drehbar angeordnet ist,
- ein Rückstellelement, das mit dem Gehäuse gekoppelt ist und nach erfolgter Betätigung das Betätigungselement (1) in seine Ausgangslage zurück bringt,
- ein mit einer Zahnkontur (6), z. B. mit Sägezähnen ausgestattetes Drehelement, das um eine Drehachse schwenkbar bzw. drehbar angeordnet ist,
- ein schwenkbar am Betätigungselement (1) angeordnetes und zur Kraftübertragung vom Betätigungselement auf das Drehelement vorgespanntes Einwegübertragungselement (3), wobei das Übertragungselement mit einem Vorspannelement gekoppelt und **dadurch** vorgespannt ist und
**dadurch gekennzeichnet,**
**dass** das Vorspannelement und das Rückstellelement als ein und dasselbe Bauteil in Form einer Feder (2) ausgebildet ist, die sowohl mit dem Gehäuse (8), als auch mit dem Einwegübertragungselement (3) gekoppelt ist und sowohl das Zurückstellen des Betätigungselementes (1) nach erfolgtem Betätigungsvorgang, als auch die Vorspannung des Einwegübertragungselementes (3) bewirkt.

2. Einwegkraftübertragung nach Anspruch 1,
**dadurch gekennzeichnet,**
**daß** das elastische Bauteil, insbesondere ein Federelement (2) sich mit einem Ende am Gehäuse bzw. Trägerteil abstützt und das andere Ende so am Einwegübertragungselement (3) angelenkt ist, daß sowohl eine Rückstellkraft auf das Betätigungselement (1) als auch eine Vorspannkraft auf das Einwegübertragungselement (3) ausgeübt wird.

3. Einwegkraftübertragung nach Anspruch 2,
**dadurch gekennzeichnet,**
**daß** der Anlenkpunkt des Federelementes (2) am Einwegübertragungselement (3) zwischen dessen Dreh- bzw. Schwenkachse und der Eingriffskontur, die in die Kontur des Drehelementes eingreift, angeordnet ist.

4. Einwegkraftübertragung nach Anspruch 2,
**dadurch gekennzeichnet,**
**daß** der Anlenkpunkt des Federelementes (2) am Einwegübertragungselement (3) so gewählt wird, dass sich ein größerer wirksamer Radius für die Ruchstellkraft um den Drehpunks des Betätigungselementes (1) als um den Drehpunks des Einwegübertragungselementes (3) ergibt, wodurch mehr Federkraft zum Zurückstellen des Betätigungselementes (1) bereitgestellt wird, als zum Andrücken des Einwegübertragungselementes (3).

5. Einwegkraftübertragung nach Anspruch 2 bis 4,
**dadurch gekennzeichnet,**
**daß** das Federelement (2) als eine Schenkelfeder oder als Spiralfeder oder als Schraubenfeder ausgebildet ist und im wesentlichen koaxial zur Achse des Drehelementes angeordnet ist.

6. Einwegkraftübertragung nach Anspruch 1 bis 5,
**dadurch gekennzeichnet,**
**daß** das Einwegübertragungselement (3) so ausgelegt ist, das es die über das Betätigungselement (1) eingeleitete Betätigungskraft auf das Drehelement, welches gleichzeitig auch als Aufwickelspule für einen Schaltzug einer Fahrradgangschaltung ausgebildet ist, sicher und nahezu verschleißfrei überträgt.

7. Einwegkraftübertragung nach Anspruch 1 bis 6,
**dadurch gekennzeichnet,**
**daß** die Schaltkomponenten wie Betätigungselement (1), Rückstellelement (2), Einwegübertragungselement (3), und Drehelement,insbesondere Schaltzugaufwickelspule, in einem Schaltergehäuse angeordnet sind und an diesem ein Halteelement zur Befestigung am Fahrrad insbesondere am Lenker vorgesehen ist.

## Claims

1. Shift lever arrangement with one-way force transmission with a resetting function, which includes:
- a housing,
- an actuating element (1), designed as a shift lever, which is arranged pivotably or rotatably about an axis of rotation,
- a resetting element which is coupled to the housing and returns the actuating element (1) into its initial position after actuation has taken place,
- a rotary element which is equipped with a toothed contour (6), for example with sawteeth, and is arranged pivotably or rotatably about an axis of rotation,
- a one-way transmission element (3) which is arranged pivotably on the actuating element (1) and is prestressed for force transmission from the actuating element to the rotary element, the transmission element being coupled to a prestressing element and thereby prestressed, and
**characterized**
**in that** the prestressing element and the resetting element are designed as a single component in the form of a spring (2) which is coupled both to the housing (8) and to the one-way transmission element (3) and effects both the resetting of the actuating element (1) after an actuation operation has taken place and the prestressing of the one-way transmission element (3).

2. One-way force transmission according to Claim 1,
**characterized in that**
the elastic component, in particular a spring element (2), is supported at one end on the housing or carrier part and the other end is articulated on the one-way transmission element (3) in such a way that both a resetting force is exerted on the actuating element (1) and a prestressing force is exerted on the one-way transmission element (3).

3. One-way force transmission according to Claim 2,
**characterized in that**
the point of articulation of the spring element (2) on the one-way transmission element (3) is arranged between the axis of rotation or pivot axis of the latter and the engagement contour which engages into the contour of the rotary element.

4. One-way force transmission according to Claim 2,
**characterized in that**
the point of articulation of the spring element (2) on the one-way transmission element (3) is selected such that a larger active radius for the resetting force results about the rotation point of the actuating element (1) than about the rotation point of the one-way transmission element (3), with the result that more spring force is provided for resetting the actuating element (1) than for pressing the one-way transmission element (3).

5. One-way force transmission according to Claims 2 to 4,
**characterized in that**
the spring element (2) is designed as a leg spring or as a spiral spring or as a helical spring and is arranged essentially coaxially to the axis of the rotary element.

6. One-way force transmission according to Claims 1 to 5,
**characterized in that**
the one-way transmission element (3) is designed in such a way that it transmits reliably, virtually free of wear, the actuating force introduced via the actuating element (1) to the rotary element which at the same time is also designed as a wind-on reel for a shift assembly of a bicycle gearshift.

7. One-way force transmission according to Claims 1 to 6,
**characterized in that**
the shift components, such as the actuating element (1), resetting element (2), one-way transmission element (3), and rotary element, in particular shift-assembly wind-on reel, are arranged in a gear-shift housing and on the latter is provided a holding element for fastening to the bicycle, in particular to the handlebar.

## Revendications

1. Dispositif de levier de changement de vitesse avec une transmission unidirectionnelle avec une fonction de rappel, qui présente:
- un boîtier,
- un élément d'actionnement (1), réalisé sous forme de levier de changement de vitesse, qui est disposé de façon pivotante respectivement tournante autour d'un axe de rotation,
- un élément de rappel, qui est couplé au boîtier et qui ramène l'élément d'actionnement (1) dans sa position initiale après l'exécution d'une commande,
- un élément rotatif pourvu d'un contour denté (6), par exemple en dents de scie, qui est disposé de façon pivotante respectivement tournante autour d'un axe de rotation,
- un élément de transmission unidirectionnelle (3) disposé de façon pivotante sur l'élément d'actionnement (1) et précontraint pour la transmission de force de l'élément d'actionnement à l'élément rotatif, l'élément de transmission étant couplé à un élément de précontrainte et étant de ce fait précontraint, et
**caractérisé en ce que** l'élément de précontrainte et l'élément de rappel sont réalisés sous la forme d'un seul et même composant sous la forme d'un ressort (2), qui est couplé aussi bien avec le boîtier (8) qu'avec l'élément de transmission unidirectionnelle (3) et qui provoque aussi bien le rappel de l'élément d'actionnement (1) après l'exécution d'une opération d'actionnement que la précontrainte de l'élément de transmission unidirectionnelle (3).

2. Transmission unidirectionnelle selon la revendication 1, **caractérisée en ce que** le composant élastique, notamment un élément de ressort (2), prend appui par une extrémité sur le boîtier respectivement la pièce de support, et l'autre extrémité est articulée sur l'élément de transmission unidirectionnelle (3) de telle façon que d'une part une force de rappel soit exercée sur l'élément d'actionnement (1) et que d'autre part une force de précontrainte soit exercée sur l'élément de transmission unidirectionnelle (3).

3. Transmission unidirectionnelle selon la revendication 2, **caractérisée en ce que** le point d'articulation de l'élément de ressort (2) sur l'élément de transmission unidirectionnelle (3) est disposé entre l'axe de rotation respectivement de pivotement de celui-ci et le contour de prise, qui vient en prise avec le contour de l'élément rotatif.

4. Transmission unidirectionnelle selon la revendication 2, **caractérisée en ce que** le point d'articulation de l'élément de ressort (2) sur l'élément de transmission unidirectionnelle (3) est choisi de telle façon qu'il en résulte un plus grand rayon utile pour la force de rappel autour du point de rotation de l'élément d'actionnement (1) qu'autour du point de rotation de l'élément de transmission unidirectionnelle (3), et que l'on crée ainsi une force élastique plus grande pour le rappel de l'élément d'actionnement (1) que pour l'application de l'élément de transmission unidirectionnelle (3).

5. Transmission unidirectionnelle selon les revendications 2 à 4, **caractérisée en ce que** l'élément de ressort (2) est réalisé sous la forme d'un ressort à branches ou d'un ressort spiral ou d'un ressort hélicoïdal et est disposé de façon sensiblement coaxiale à l'axe de l'élément rotatif.

6. Transmission unidirectionnelle selon les revendications 1 à 5, **caractérisée en ce que** l'élément de transmission unidirectionnelle (3) est conçu de façon à transmettre, de façon fiable et pratiquement sans usure, la force d'actionnement introduite par l'élément d'actionnement (1) à l'élément rotatif, qui est en même temps réalisé sous la forme d'une bobine d'enroulement pour un câble de changement de vitesse d'un changement de vitesse de bicyclette.

7. Transmission unidirectionnelle selon les revendications 1 à 6, **caractérisée en ce que** les composants de changement de vitesse, comme l'élément d'actionnement (1), l'élément de rappel (2), l'élément de transmission unidirectionnelle (3) et l'élément rotatif, notamment la bobine d'enroulement du câble de changement de vitesse, sont disposés dans un boîtier de changement de vitesse et il est prévu sur ce dernier un élément de support pour sa fixation sur la bicyclette, en particulier sur le guidon.
